# EUROPEAN PATENT SPECIFICATION

(11) **EP 3 364 326 B1**
(45) Date of publication and mention of the grant of the patent: **13.05.2020**
(21) Application number: 16905916.9
(22) Date of filing: 25.06.2016
(51) Int. Cl.: G06F 21/31, G06F 21/32, G06F 3/0488

(54) **METHOD AND APPARATUS FOR GENERATING PASSWORD BY MEANS OF PRESSURE TOUCH CONTROL**
VERFAHREN UND VORRICHTUNG ZUR ERSTELLUNG EINES PASSWORTS MITHILFE VON DRUCKBERÜHRUNGSSTEUERUNG
PROCÉDÉ ET APPAREIL POUR GÉNÉRER UN MOT DE PASSE AU MOYEN D'UNE COMMANDE TACTILE À PRESSION

(43) Date of publication of application: 22.08.2018
(73) Proprietor: Huawei Technologies Co., Ltd., Longgang District Shenzhen, Guangdong 518129 (CN)
(72) Inventor: WANG, Shoucheng, Shenzhen Guangdong 518129 (CN)
(74) Representative: Epping - Hermann - Fischer
(86) International application number: PCT/CN2016/087190
(87) International publication number: WO 2017/219376

(56) References cited:
- CN-A- 105 354 458
- CN-A- 105 354 458
- CN-A- 105 426 100
- CN-A- 105 426 100
- CN-A- 105 446 622
- CN-A- 105 446 622
- US-A1- 2013 347 101
- US-A1- 2013 347 101
- N/a: "android Specifying the Input Method Type | Android Developers https", https://stuff.mit.edu, 26 April 2013 (2013-04-26), pages 1-3, XP055512461, Retrieved from the Internet: URL:https://stuff.mit.edu/afs/sipb/project /android/docs/training/keyboard-input/styl e.html [retrieved on 2018-10-04]

## Description

### TECHNICAL FIELD

The present invention relates to the field of data processing, and specifically, to a method and an apparatus for generating a password by means of press touch.

### BACKGROUND

It is becoming common to enter a password by using a touchscreen. However, like a physical keyboard, a touch input keyboard (also referred to as a soft keyboard or a virtual keyboard, and referred to as the soft keyboard below) also faces a security risk. When a user enters a password, in particular, when the user enters a password by using a soft keyboard of a device such as a smartphone, an automatic teller machine, or a POS (point of sale) machine, the password is likely to be peeped, there is a risk of password disclosure, and even adverse outcomes may be caused, such as a property loss caused because an account is stolen.

In an existing anti-peeping technology, a physical shield is added to the foregoing device, or key positions of the soft keyboard are changed. The former requires hardware reconstruction costs and has a cumbersome appearance; the latter cannot entirely eliminate a risk of being peeped. Both the two reduce user input convenience.

In addition, in the prior art, Chinese Patent of Publication No. CN102982269A discloses a password anti-peeping authentication method and system based on a biometric measurement feature. In the method, when a user enters a password, the user's biometric feature, that is, a pressure degree of each operation, is recorded at the same time. A pressure sequence is used as the password or a part of the password to enhance password security. The method changes a password storage system, and cannot be compatible with a currently widely-used password entering mode. Another U.S. Patent of Publication No. US7305559B2 discloses a password entering mode with an entering rhythm. However, if the entering rhythm is peeped or is illegally recorded by a camera, password disclosure can still be caused. Therefore, in the prior art, there is still a problem of low security and poor convenience during password entering. CN105426100A discloses a pressure sensor based password input apparatus. The pressure sensor based password input apparatus comprises a receiving module used for receiving touch operation triggered by a user based on a password input interface, and a processing module used for taking an input password corresponding to the touch operation with a touch pressure value greater than a preset pressure threshold as an effective password, wherein the effective password is compared with a pre-stored password to verify the user operation.

### SUMMARY

The present invention is defined by the appended claims. In view of the above, embodiments provide a method and an apparatus for generating a password by means of press touch. While password security is greatly improved, a user can conveniently and flexibly enter a password, and the password is also compatible with a conventional touch device and its password storage system. According to a first aspect, an embodiment of the present invention provides a method for generating a password by means of press touch. The method includes: determining, by a device, whether a current interface is in a password entering state; when determining that the current interface is in a password entering state, receiving, by the device, user input information, where the input information includes a character and a pressure value generated when the character is entered; and processing, by the device, the character according to the pressure value, to generate a password. According to the foregoing technical solution, security is effectively improved when a user enters a password, and the user can more conveniently and flexibly enter the password.

With reference to the first aspect, in a first implementation of the first aspect, the current interface is a user interface having an input focus, that is, the user interface may receive information entered by the user by using an input device such as a pressure-sensitive touchscreen, a keyboard, or a mouse. Only when the current interface is a user interface for entering a password, the device is triggered to receive a password entered by the user. In this way, input efficiency is improved, and a specific quantity of electricity is saved.

With reference to the first aspect and the first implementation of the first aspect, in a second implementation of the first aspect, the determining, by a device, whether a current interface is in a password entering state is specifically: determining, by the device, whether the current interface is in a password entering state according to an input box type of the current interface. A device that runs an Android operating system is used as an example, and the device determines the input box type according to an InputType mark of an input box.

With reference to the first implementation of the first aspect and the second implementation of the first aspect, in a third implementation of the first aspect, when the device obtains that the input box type is android:inputType="textPassword", the device determines that the current interface is in a password entering state. Optionally, to avoid password disclosure, the input box of the current interface of the device may not display an actual entered character, for example, may hide the entered character, or may display a "*" symbol, a "•" symbol, or another symbol unrelated to the entered character, to prevent the entered character from being peeped.

With reference to the first aspect, in a fourth implementation of the first aspect, when determining that the current interface is not in a password entering state, the device adjusts an input mode of an input method according to an input box type of the current interface.

With reference to the first aspect, in a fifth implementation of the first aspect, the method further includes: after the password is generated, verifying the password. Optionally, the generated password is submitted to a password entering box to compare with a correct password.

With reference to the first aspect, in a sixth implementation of the first aspect, the processing, by the device, the character according to the pressure value specifically includes: if there are multiple password generation algorithms, generating a password according to a password generation algorithm selected by the user. Optionally, the user may be reminded of a currently applicable password generation algorithm in a manner of text, picture, audio, video, and the like in the user's password entering process. Further, content for reminding may be disguised to confuse a peeper. Optionally, the selection may be as follows: The device determines a finger used by the user for entering; and the device invokes a corresponding password generation algorithm according to a different finger. In this way, different password generation algorithms can be invoked at any time according to different cases, and therefore, security and convenience are greatly improved during password entering.

With reference to the first aspect and the sixth implementation of the first aspect, in a seventh implementation of the first aspect, the input information is (Xₙ, Yₙ), Xₙ is an entered character, Yₙ is a pressure value corresponding to Xₙ, and n is a natural number; and the processing, by the device, the character according to the pressure value, to generate a password is specifically: determining, by the device, whether Yₙ is less than a preset first threshold Yₘₐₓ₁; and when determining Yₙ<Yₘₐₓ₁, generating, by the device, a password Xₙ. Alternatively, the foregoing password generation algorithm may be expressed as follows: The device determines whether a pressure value corresponding to each character is less than the preset first threshold, and the device generates a password according to a character whose pressure value is less than the first threshold. Therefore, the generated password does not include pressure value information, is totally compatible with an existing password storage system, and may be used for unlocking of various devices having a pressure-sensitive touchscreen.

With reference to the first aspect and the sixth implementation of the first aspect, in an eighth implementation of the first aspect, the input information is (Xₙ, Yₙ), Xₙ is an entered character, Yₙ is a pressure value corresponding to Xₙ, and n is a natural number; and the processing, by the device, the character according to the pressure value, to generate a password is specifically: determining, by the device, whether Yₙ is greater than a preset second threshold Yₘₐₓ₂; and when determining Yₙ>Yₘₐₓ₂, generating, by the device, a password Xₙ, Xₙ. Alternatively, the foregoing password generation algorithm may be expressed as follows: The device determines whether a pressure value corresponding to each character is greater than the preset second threshold, and the device repeatedly enters a character whose input pressure value is greater than the second threshold, to generate a password. Therefore, the generated password does not include pressure value information, is totally compatible with an existing password storage system, and may be used for unlocking of various devices having a pressure-sensitive touchscreen.

With reference to the first aspect and the sixth implementation of the first aspect, in a ninth implementation of the first aspect, the input information is specifically (X₁, Y₁), (X₂, Y₂), ..., (Xₖ₋₁, Yₖ₋₁), (Xₖ, Yₖ), (Xₖ₊₁, Yₖ₊₁), ..., and (Xₙ, Yₙ), X₁, X₂, ..., Xₖ₋₁, Xₖ, Xₖ₊₁, ..., and Xₙ are entered characters, Y₁, Y₂, ..., Yₖ₋₁, Yₖ, Yₖ₊₁, ..., and Yₙ are pressure values corresponding to the characters, k and n are natural numbers, and n≥k>1; and the processing, by the device, the character according to the pressure value, to generate a password is specifically: determining, by the device, whether Y₁, Y₂, ..., Yₖ₋₁, Yₖ, Yₖ₊₁, ..., and Yₙ are greater than a preset third threshold Yₘₐₓ₃; and when determining that Yₖ₋₁ is the first pressure value greater than the third threshold Yₘₐₓ₃, generating, by the device, a password Xₖ₋₁, Xₖ, Xₖ₊₁, ..., Xₙ. Alternatively, the foregoing password generation algorithm may be expressed as follows: The device determines whether a pressure value corresponding to each character is greater than the preset third threshold, and the device generates a password according to the first character whose pressure value is greater than the third threshold and a character following the first character. Therefore, the generated password does not include pressure value information, is totally compatible with an existing password storage system, and may be used for unlocking of various devices having a pressure-sensitive touchscreen.

With reference to the first aspect and the sixth implementation of the first aspect, in a tenth implementation of the first aspect, the input information is specifically (X₁, Y₁) and (X₂, Y₂), X₁ and X₂ are entered characters, and Y₁ and Y₂ are pressure values corresponding to the characters; and the processing, by the device, the character according to the pressure value, to generate a password is specifically: determining, by the device, whether Y₁ is greater than or less than Y₂; and if Y₂>Y₁, generating a password X₂, X₁; or if Y₂≤Y₁, generating a password X₁, X₂. Alternatively, the foregoing password generation algorithm may be expressed as follows: The device compares pressure values corresponding to two adjacent characters; and if a pressure value corresponding to a latter character is greater than a pressure value corresponding to a former character, transposes the two characters; or if a pressure value corresponding to a latter character is less than or equal to a pressure value corresponding to a former character, remains an order of the characters; and generates a password. Therefore, the generated password does not include pressure value information, is totally compatible with an existing password storage system, and may be used for unlocking of various devices having a pressure-sensitive touchscreen.

According to the foregoing different password generation algorithms, the device may use user input information including a pressure value to generate a password, and even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

According to a second aspect, an embodiment of the present invention provides an apparatus, including a pressure-sensitive touchscreen, one or more processors, a storage, and one or more programs, where the one or more programs are stored in the storage, and are executed by the one or more processors, the one or more programs include an instruction, and the instruction is used by a device to determine whether a current interface is in a password entering state; by the device to receive user input information when determining that the current interface is in a password entering state, where the input information includes a character and a pressure value generated when the character is entered; and by the device to process the character according to the pressure value, to generate a password. A specific method is the same as the method according to the first aspect.

According to a third aspect, an embodiment of the present invention provides an apparatus, including a pressure-sensitive touchscreen, a processor, and a storage, where the processor determines whether a current interface is in a password entering state; when the processor determines that the current interface is in a password entering state, the pressure-sensitive touchscreen receives user input information, where the input information includes a character and a pressure value generated when the character is entered; the processor processes the character according to the pressure value, to generate a password, where a password generation algorithm is stored in the storage. A specific method is the same as the method according to the first aspect.

According to a fourth aspect, an embodiment of the present invention provides an apparatus for generating a password by means of press touch, where the apparatus includes a state determining unit, an input receiving unit, and a password generation unit; the state determining unit is configured to determine whether a current interface is in a password entering state; the input receiving unit is configured to: when the state determining unit determines that the current interface is in a password entering state, receive user input information, where the input information includes a character and a pressure value generated when the character is entered; and the password generation unit is configured to process the character according to the pressure value, to generate a password. A specific method is the same as the method according to the first aspect.

According to a fifth aspect, an embodiment of the present invention provides a computer storage medium that stores one or more programs, where the one or more programs include an instruction, and the instruction is used to perform the method according to the first aspect. According to the technical solutions, password anti-peeping is greatly improved, and even if a person remembers all key input of a user, the person cannot learn final input of the user, so that the password is effectively prevented from being peeped, and security is greatly improved during password entering.

### BRIEF DESCRIPTION OF DRAWINGS

FIG. 1 is a schematic structural diagram of hardware of a mobile phone according to an embodiment of the present invention;
FIG. 2 is a schematic structural diagram of an operating system of a mobile phone according to an embodiment of the present invention;
FIG. 3 is a schematic diagram of a logical frame of an input method according to an embodiment of the present invention;
FIG. 4A is a schematic diagram of an interface of a soft keyboard input method according to an embodiment of the present invention;
FIG. 4B is a schematic diagram of another interface of a soft keyboard input method according to an embodiment of the present invention;
FIG. 4C is a schematic diagram of an interface of a password entering state according to an embodiment of the present invention;
FIG. 5 is a schematic diagram of a method for generating a password by means of press touch according to an embodiment of the present invention;
FIG. 6 is a schematic diagram of a password generation algorithm according to an embodiment of the present invention;
FIG. 7 is a schematic diagram of another password generation algorithm according to an embodiment of the present invention;
FIG. 8 is a schematic diagram of another password generation algorithm according to an embodiment of the present invention;
FIG. 9 is a schematic diagram of still another password generation algorithm according to an embodiment of the present invention;
FIG. 10 is a schematic diagram of yet another password generation algorithm according to an embodiment of the present invention;
FIG. 11 is a schematic diagram of still yet another password generation algorithm according to an embodiment of the present invention;
FIG. 12 is a schematic diagram of an anti-peering method for a mobile phone according to an embodiment of the present invention;
FIG. 13 is a schematic diagram of an apparatus according to an embodiment of the present invention; and
FIG. 14 is a schematic diagram of an apparatus for generating a password by means of press touch according to an embodiment of the present invention.

### DESCRIPTION OF EMBODIMENTS

The technical solutions in embodiments of the present invention are clearly described in detail in the following with reference to the accompanying drawings of the embodiments.

Some devices in the embodiments of the present invention have a pressure-sensitive touchscreen, to implement press touch by means of pressure sensing. The embodiments of the present invention are applicable to all scenarios in which a password is entered by using a touchscreen. A related device includes but is not limited to a mobile phone, a tablet computer, a smart watch, an automatic teller machine, a POS machine, and an access control system that have a touch input function. In a typical scenario, for example, a touchscreen is used to unlock a mobile phone and an application of the mobile phone, an access control password is entered, a touchscreen of an automatic teller machine is used to enter a password of a bank card, and a touchscreen of a POS machine is used to enter a password of a bank card. An operating system installed on the devices includes but is not limited to iOS®, Android®, Microsoft®, DOS, Unix, Linux, or another operating system. A touch operation may be completed by touching a touchscreen by using a proper part or an object such as a finger or a stylus. In some embodiments of the present invention, a smartphone that runs an Android operating system is used as an example. A person skilled in the art should understand that a method in the embodiments of the present invention is also applicable to another device that has a touch input function.

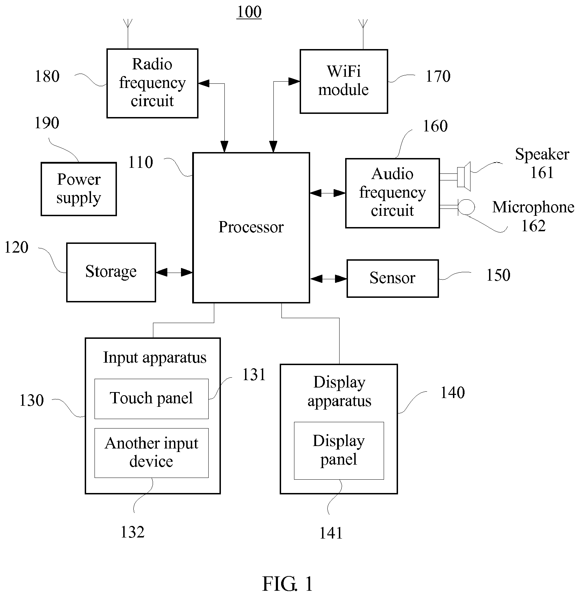

FIG. 1 is a schematic structural diagram of hardware of a mobile phone 100. It should be understood that, the mobile phone 100 is merely an example of the foregoing devices that have a touch input function, and the mobile phone 100 may have more or fewer components than those shown, may combine two or more components, or may have different configuration or deployment of these components. Various components shown in FIG. 1 may be implemented in a hardware or software manner or in a manner of software and hardware combination, including one or more signal processors and/or application-specific integrated circuits.

The mobile phone 100 includes a processor 110, a storage 120, an input apparatus 130, a display apparatus 140, a sensor 150, an audio frequency circuit 160, a WiFi module 170, a radio frequency module 180, and a power supply 190. These components communicate by using one or more communications buses or signal lines.

The processor 110 is a control center of the mobile phone 100, is connected to each part of the mobile phone 100 by using various interfaces and lines, and by running or executing a software program or an instruction set that is stored in the storage 120 and by invoking data stored in the storage 120, performs various functions of the mobile phone 100 and data processing, so as to perform overall monitoring on the mobile phone 100. Optionally, the processor 110 may include one or more processing units. Optionally, an application processor and a modem processor may be integrated into the processor 110. The application processor mainly processes an operating system, a user interface, an application, and the like; and the modem processor mainly processes wireless communication. It may be understood that the modem processor may not be integrated into the processor 110. In some embodiments, the processor 110 may include an image signal processor and a dual-core/multi-core processor. The storage 120 may be configured to store a software program and a function module, and the processor 110 runs the software program and the function module that are stored in the storage 120, so as to perform various functional applications of the mobile phone 100 and data processing. The storage 120 may mainly include a program storage area and a data storage area, where the program storage area may store an operating system, an application required by at least one function (such as an audio playing function or an image playing function), and the like; and the data storage area may store data (such as audio data or an address book) created according to use of the mobile phone 100, and the like. In addition, the storage 120 includes a high-speed random access memory, and further includes a nonvolatile memory, such as at least one magnetic disk storage component, a flash memory component, or another volatile solid-state storage component. The storage 120 may store various operating systems such as the Windows operating system of Microsoft or the Android operating system developed by Google. In some embodiments of the present invention, the storage 120 may store the Android operating system.

The input apparatus 130 may be configured to receive entered numbers or character information, and generate key signal input related to user setting and function control of the mobile phone 100. Specifically, the input apparatus 130 may include a touch panel 131 and another input device 132. The touch panel 131, also referred to as a touchscreen, may collect a touch operation (for example, an operation performed by the user on or near the touch panel 131 by using any proper part or object, such as a finger or a stylus) of the user on or near the touch panel 131, and drive a corresponding connected apparatus according to a preset program. Optionally, the touch panel 131 may include two parts: a touch detection apparatus and a touch controller. The touch detection apparatus detects a touch orientation of the user, detects a signal brought by a touch operation, and transfers the signal to the touch controller. The touch controller receives touch information from the touch detection apparatus, converts the touch information into coordinates of a touch point, then sends the coordinates of the touch point to the processor 110, and can receive and perform a command sent by the processor 110. In addition, the touch panel 131 is implemented by using multiple types, such as a resistive type, a capacitive type, an infrared ray, and a surface acoustic wave. The input apparatus 130 includes the another input device 132 in addition to the touch panel 131. Specifically, the another input device 132 includes but is not limited to one or more of a physical keyboard, a function key (for example, a volume control key, an on/off key, or a Home key), a trackball, a mouse, or a joystick.

Specifically, the touch panel 131 includes a touch-sensitive surface (touch-sensitive surface). The touch-sensitive surface is used to perform various operations related to touch detection, for example, to determine whether there is a touch (for example, to detect a finger pressing event), a pressure value of the touch, and coordinate information, to determine whether there is touch movement and track the movement on the entire touch-sensitive surface (for example, to detect a one-or-more finger dragging event), and to determine whether the touch ends (for example, to detect a finger release event or touch interruption). Determining movement of a touch point may include: determining a rate (speed) of the touch point, a velocity (speed and direction), and/or an acceleration (change of the speed and/or the direction), and the movement of the touch point is indicated by a series of touch data. These operations may be applied to a single-point touch (for example, a one-finger touch) or applied to a multiple-point simultaneous touch (for example, a "multi-point touch"/a multi-finger touch). A touch detection technology includes but is not limited to a capacitive type, a resistive type, an infrared ray, and a surface acoustic wave technology.

It should be noted that, the touch panel 131 should be understood as a touch input device in a broad sense. The touch-sensitive surface may be integrated into a display screen, or may be separately disposed as a separate touch input device to connect to a system. For example, coordinating a mouse movement and a mouse button press (with or without pressing or holding a single key or multiple keys), user movement, slight tap, drag, roll, and the like on a touch panel, stylus input, device movement, a verbal instruction, detected eye movement, biometric feature input, and/or any combination thereof may be used as touch input devices.

Although reference is mainly made to finger input (for example, a single-finger touch, a single-finger slight tap gesture, and a single-finger slide gesture) in the following embodiments, it should be understood that, in some embodiments, one or more of the finger input may be replaced by input (for example, stylus input) from another touch input device.

In this specification, unless otherwise specified, a user's gesture is flexible, and may be a tap, a double tap, a circle, a line, a single-finger touch, a multiple-finger touch, or the like. A person of ordinary skill in the art may understand that, a specific gesture may be flexibly selected as long as basically same effects can be achieved. In this specification, unless otherwise specified, a user's gesture flexibly acts on a position or an area on the touch-sensitive surface, and may act on or near an area of an application interface element displayed on the display screen, on a vacant area in which no application interface element is displayed on the display screen, on an area of function setting displayed on the display screen, and the like. A person of ordinary skill in the art may understand that, a specific position or area of the touch-sensitive surface on which a gesture acts may be flexibly set as long as basically same effects can be achieved. In this embodiment of the present invention, the touch panel 131 detects a user's touch input, and collects press touch information when the touch input is performed, where the press touch information includes a character and a corresponding pressure value.

The display apparatus 140 may be configured to display information entered by the user or information provided for the user, and various menus of the mobile phone 100. The display apparatus 140 may include a display panel 141. Optionally, the display panel 141 is configured in a form of an LCD (Liquid Crystal Display, liquid crystal display), an OLED (Organic Light-Emitting Diode, organic light-emitting diode), and the like. Further, the touch panel 131 may cover the display panel 141. When detecting a touch operation on or near the touch panel 131, the touch panel 131 transfers the touch operation to the processor 110 to determine a type of a touch event, and then the processor 110 provides corresponding visual output on the display panel 141 according to the type of the touch event. The visual output includes a text, a graph, an icon, a video, and any combination thereof. In some embodiments, some visual output or all visual output may be corresponding to user interface objects. Although the touch panel 131 and the display panel 141 in FIG. 1 are used as two independent parts to implement input and output functions of the mobile phone 100, in some embodiments, the touch panel 131 and the display panel 141 are integrated to implement the input and output functions of the mobile phone 100.

The mobile phone 100 may further include the sensor 150, such as a light sensor, a motion sensor, and another sensor. Specifically, the light sensor may include an ambient light sensor and a proximity sensor. The ambient light sensor may adjust luminance of the display panel 141 according to brightness of environment light, and the proximity sensor may disable the display panel 141 or/and backlight when the mobile phone 100 approaches an ear. As a motion sensor, an accelerometer sensor may detect an acceleration value in each direction (usually on three axes), and detect a value and a direction of gravity when the accelerometer sensor is static, and may be used for an application for recognizing a mobile phone posture (for example, landscape/portrait switching, a related game, and magnetometer posture calibration), a function related to vibration recognition (such as a pedometer or a knock), and the like. Optionally, other sensors such as a gyroscope, a barometer, a hygrometer, a thermometer, and an infrared sensor may also be disposed on the mobile phone 100, and details are not described herein.

The mobile phone 100 may further include the audio frequency circuit 160, and a speaker 161 and a microphone 162 may provide an audio interface between the user and the mobile phone 100. The audio frequency circuit 160 may convert received audio data into an electrical signal, and transmit the electrical signal to the speaker 161, and the speaker 161 converts the electrical signal into a voice signal for output. In addition, the microphone 162 converts a collected voice signal into an electrical signal, and the audio frequency circuit 160 receives the electrical signal, converts the electrical signal into audio data, and outputs the audio data to the processor 110 for processing, so as to send the audio data to another mobile phone by using the radio frequency circuit 180, or output the audio data to the storage 120 for further processing. In some embodiments, the audio frequency circuit 160 further includes an earphone jack. The earphone jack provides an interface between the audio frequency circuit 160 and a removable audio input/output peripheral device. The peripheral device is, for example, an earphone used only for outputting or an earphone used for both outputting (for example, a single-earpiece or double-earpiece earphone) and inputting (for example, a microphone).

The radio frequency (RF) circuit 180 may be configured to receive and send information or receive and send a signal in a call process; convert an electrical signal into an electromagnetic signal or convert an electromagnetic signal into an electrical signal; communicate with a communications network or another communications device by using an electromagnetic signal; in particular, after receiving downlink information from a base station, send the downlink information to the processor 110 for processing; in addition, send designed uplink data to the base station. The radio frequency circuit 180 may include a well-known circuit system that is used to perform these functions, and the circuit system includes but is not limited to an antenna system, a radio frequency transceiver, one or more amplifiers, a tuner, one or more oscillators, a digital signal processor, a codec chip set, or a SIM (Subscriber Identity Module, subscriber identity module) card. The radio frequency circuit 180 may communicate with a network and another device by means of wireless communications, and the network, for example, is the Internet, an intranet, and/or a wireless network (for example, a cellular phone network, a wireless local area network, and/or a metropolitan area network). Wireless communications may use any type of multiple communications standards, protocols, and technologies, which include but are not limited to Global system for mobile communications, enhanced data GSM environment, High Speed Downlink Packet Access, High Speed Uplink Packet Access, Wideband Code Division Multiple Access, Code Division Multiple Access, Time Division Multiple Access, Bluetooth, Wireless Fidelity (for example, IEEE 802.11a, IEEE 802.11b, IEEE 802.11g, and/or IEEE 802.11n), Voice over Internet Protocol, Wi-MAX, email protocol (for example, Internet Message Access Protocol (IMAP) and/or Post Office Protocol (POP)), instant messaging (for example, Extensible Messaging and Presence Protocol (XMPP), Session Initiation Protocol for Instant Messaging and Presence Leveraging Extensions (SIMPLE), instant message and presence service (IMPS)), and/or short message service (SMS), or any other proper communications protocol, including a communications protocol that has not been developed at the submission date of this document.

The power supply 190 is configured to supply power to the mobile phone 100 and perform power management. Specifically, the power supply 190 may include a power management system, one or more power supplies (for example, a battery, an alternating current power supply), a recharging system, an electrical fault detection circuit, a power converter or an inverter, an electrical status indicator (for example, a light-emitting diode), and any other component related to generating, management, and allocation of electricity in the mobile phone.

The mobile phone 100 may further include a camera, a Bluetooth module, and the like, which are not shown though and are not described herein.

The storage 120 of the mobile phone 100 may store an Android operating system, and the Android operating system is a mobile device operating system based on Linux, includes an operating system, middleware, a user interface, and application software, and implements various functions by using the foregoing hardware provided by the mobile phone. An architecture of the stored Android operating system is described below in detail.

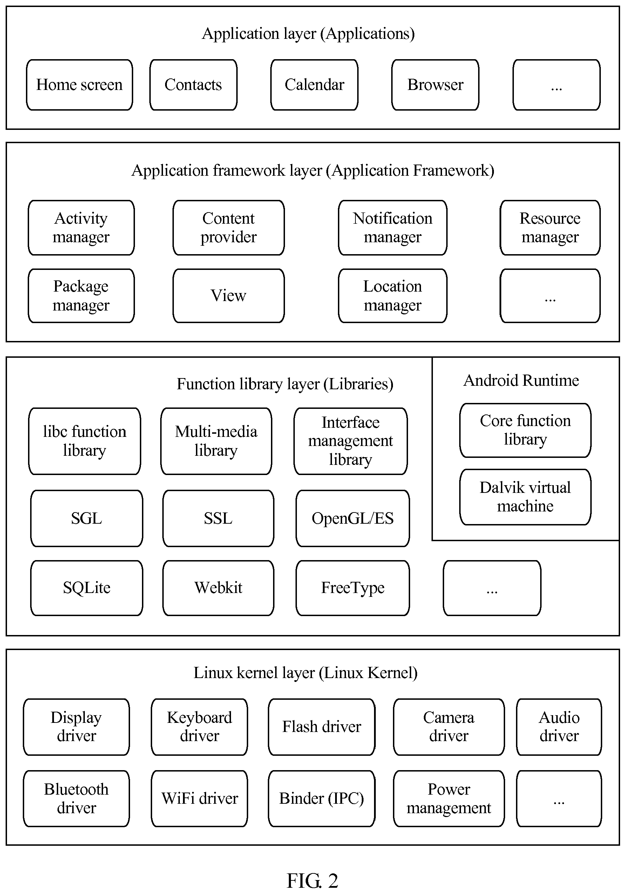

FIG. 2 is a schematic structural diagram of an operating system of a mobile phone that runs an Android operating system. An architecture of the Android operating system is classified into four layers: an application layer, an application framework layer, a function library layer, and a Linux kernel layer from top to bottom.

### 1. Application layer:

The application layer (Applications) is the uppermost layer of the architecture of the Android operating system, and includes core application software assembled in the Android operating system, for example, email client, short message service, phone, calendar, map, browser, and contacts. Certainly, for a developer, the developer may compile and install application software at the layer. Generally, an application is developed in Java language, and this is completed by invoking an API (Application Programming Interface) provided by the application framework layer.

### 2. Application framework layer:

The application framework layer (Application Framework) mainly provides various APIs that can be used by the developer to access an application. The developer interacts with an Android lower layer (for example, the function library layer or the Linux kernel layer) by using the application framework layer, to develop an own application. The application framework layer mainly includes a series of services and management systems of the Android operating system. The application framework layer mainly includes the following key services:
activity manager (Activity Manager): used to manage a life cycle of an application, and provide a commonly-used navigation back function;
content provider (Content Providers): used to manage data sharing and access between different applications;
notification manager (Notification Manager): used to control an application to display information for reminding on a status bar (for example, an alert (Alerts) and a notification message (Notifications)) to a user;
resource manager (Resource Manager): used to provide a non-code resource (for example, a character string, a graph, and a layout file (Layoutfile)) for an application for use;
package manager (Package Manager): mainly used to manage an application of the Android operating system;
view (View): has abundant and extensible view sets, may be used to construct an application, and specifically includes a list (List), a grid (Grid), a text box (TextBox), a button (Button), and an embedded web browser; and
location manager (Location Manager): mainly used to allow an application to access a current geographical location of the mobile phone.

### 3. Function library layer:

The function library layer (Libraries) is a support of the application framework, and is an important link to connect the application framework layer and the Linux kernel layer. The function library layer includes some function libraries compiled by using a computer programming language C or C++. These function libraries can be used by different components in the Android operating system, and provide a service for the developer by using the Android application framework. Specifically, the function library includes a libc function library, and the libc function library is specially customized for a device based on embedded Linux. The function library further includes a multi-media library (Media Framework) of the Android operating system, and the library supports playback and recording of audio/videos in multiple encoding formats, and supports a still image file and a common audio/video encoding format. The function library further includes a surface management library (Surface Manager). The surface management library is mainly responsible for managing access to a display system, is specifically used to be responsible for managing interaction between display and access operations when multiple applications are performed, and is also responsible for display composition of 2D drawing and 3D drawing.

The function library layer further includes another function library used to implement each function of the mobile phone having the Android operating system, for example, SGL (Scalable Graphics Library), which is a 2D graph image processing engine based on an XML (Extensible Markup Language) file; SSL (Secure Sockets Layer), which is located between the TVP/IP protocol (Transmission Control Protocol/ Internet Protocol, Transmission Control Protocol/Internet Protocol) and various application layer protocols, to provide a support for data communication; OpenGL/ES, which supports 3D effects; SQLite, which is a relational database engine; Webkit, which is a Web browser engine; and FreeType, which supports a bitmap (Bitmap) and a vector (Vector) font.

Android Runtime is a running environment in the Android operating system, and is a new virtual machine used in the Android operating system. An AOT (Ahead-Of-Time) technology is used in Android Runtime. When an application is installed for the first time, a bytecode of the application is pre-compiled into a machine code, to make the application a real local application. Then, when the application runs again, a compilation step is reduced, and enabling and performing of the application become faster.

In some other embodiments of the present invention, Android Runtime may also be replaced by a core function library (Core Libraries) and a Dalvik virtual machine (Dalvik Virtual Machine). The core function library provides most functions of an API (Application Programming Interface) in the Java language, and provides an interface for the application framework layer in a JNI (Java Native Interface) manner to invoke a lower application library. In addition, the core function library also includes some core APIs of Android, such as android.os, android.net, and android.media. The Dalvik virtual machine uses a JIT (Just-in-Time) compilation mechanism during running. The virtual machine needs to re-compile a bytecode on a background each time a process is enabled, and this affects an enabling speed. Each Android application runs in one instance in the Dalvik virtual machine, and each Dalvik virtual machine instance is an independent process space. The Dalvik virtual machine is designed to allow that one device can effectively run multiple virtual machines. The Dalvik virtual machine may execute a file format .dex. The dex format is a compression format specially designed for Dalvik, and is suitable for a system having limited memory and a processor speed. It should be noted that, the Dalvik virtual machine depends on the Linux kernel that provides a basic function (thread and lower layer memory management). It may be understood that, Android Runtime and Dalvik belong to virtual machines of different types, and a person skilled in the art may select virtual machines of different forms in different cases.

### 4. Linux kernel layer:

Android core system services such as security, memory management, process management, network protocol stack, and driver model are based on the Linux kernel. The Linux kernel also serves as an abstract layer between hardware and a software stack. The layer has many driver programs related to a mobile device, and main drivers include: a display driver, which is a frame buffer (Frame Buffer) driver based on Linux; a keyboard driver (KeyBoard Driver), which serves as a keyboard driver of an input device; a Flash driver (Flash Memory Driver); which is a Flash driver program based on an MTD (memory technology device, memory technology device); a camera driver (Camera Driver), which is a commonly-used v412 (Video for Linux) based on Linux; an audio driver (Audio Driver), which is a commonly-used advanced Linux sound system driver based on an ALSA (Advanced Linux Sound Architecture); a Bluetooth driver (Bluetooth Driver), which is a radio transmission technology based on an IEEE 802.15.1 standard; a WiFi driver (WiFi Drive), which is a driver program based on an IEEE 802.11 standard; a Binder (IPC) driver, which is a special Android driver program, has a separate device node, and provides a function of communication between processes; and power management (Power Management), such as a battery level.

Implementation of an input method needs participation of each layer of the Android operating system. The user's input can be recognized only with support of various drivers at the Linux kernel layer, and an application of the input method needs to be invoked to run at the application layer. The application framework layer is used to display content, a UI, a notification, and the like of the application. The function library layer provides a function for running of the input method, for example, code parsing, font and graph support, and displaying of input animation effect.

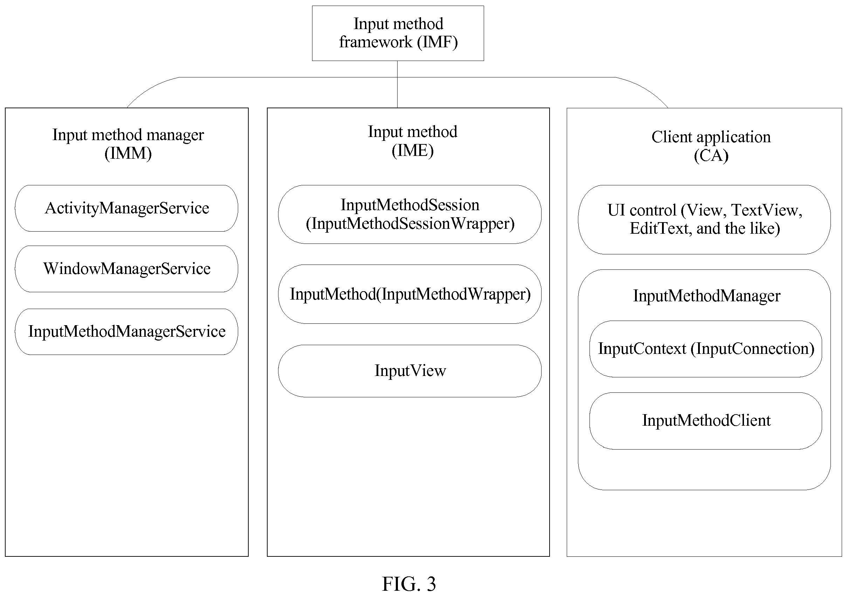

Specifically, an input method framework (Input Method Framework, IMF for short below) is a system component of the Android operating system. The developer may develop an input method application based on the IMF. With reference to this embodiment of the present invention, referring to FIG. 3, the IMF mainly includes three parts: an input method manager, an input method editor, and client applications.
1. The input method manager (Input Method Manager, IMM for short below) is a central point to manage interaction between other parts of the IMF. The input method manager may be considered as a client API, exists in context of each application, and is used to communicate with a global system service that manages interaction between all processes.
2. The input method editor (Input Method Editor, IME for short below) is used to implement a specific interaction model. The interaction model allows a user to generate a text, and processes the user's input. A system is bound with an input method that is currently being used, to enable construction and running of the input method. The system decides when to hide the input method or display its user interface (User Interface, UI for short below). Only one IME can run at a time.
3. The client applications (Client Applications, CA for short below) are applications that currently invoke the input method, and control an input focus and a status of the IME by using the IMM. Only one client application can use the IME each time.

The three parts need to cooperate to complete working of the input method. For example, an application that needs to invoke the input method is enabled. When an input box obtains an input focus, the CA notifies the IMM to enable the input method, and then the IMM checks a currently selected IME, and invokes the IME. When the user submits input, the IME transfers input information to the CA to complete input.

An interaction process of the three parts of the IMF is described below with reference to FIG. 3.

The IMM completes binding between the IME and the CA, performs some parameter setting and security control for an input method module, and plays an intermediate coordination role. InputMethodManagerService of the IMM is a global control center of all things related to the input method in the entire system. The CA requests to invoke the input method by using this process. WindowManagerService is responsible for displaying the input method, receives a user's event, and obtains focus authentication. The InputMethodManagerService process in the IMM obtains information about the currently bound CA by using an InputMethodClient process in the CA, such as an input box type. The InputMethodManagerService process in the IMM enables, modifies, and hides the IME by using an InputView process in the IME.

The IME receives a user's key input information, and invokes a client interface to transfer the input information to the CA. The InputView process may obtain the user input information from a touchscreen, and may process text information of the CA by using an InputContext (InputConnection) process in the CA, for example, an operation of deleting a character, replacing a character, or controlling a cursor position.

The CA is used to display the user input information, and provide content of a current text box for the IME. An InputMethodManager process in the CA indirectly controls displaying and hiding of the IME by using the InputMethodManagerService process in the IMM. The InputMethodManager process in the CA provides a status of the current text box for the IME by using an InputMethodSession (InputMethodSessionWrapper) process in the IME, for example, information such as a cursor change, so that the IME adjusts an input status. A UI control may process some key information that has not been processed by the IME, such as Home key information, so that the information directly arrives at the CA. The InputContext (InputConnection) process may display the input information on the user interface after the interaction between the CA and the IME is complete. The InputMethodClient is implemented as a client of an input method management service, and is used to identify itself and receive a status change from a management service end.

During initialization of an input method, the following things are to be done:
1. Register some system events, and process interaction between an event (open or close a screen, close a system dialog box, and change a package) and the input method. For example, an input method menu is closed when a screen is closed, and when an input method package is deleted, the input method is removed from an available list.
2. Load an input method list (buildInputMethodListLocked), read an enabled input method, and if setting is empty, load all input methods, and select a default input method.
3. Load a status bar icon and the like.

Whether a current interface is in a password entering state may be determined according to an input box type. The InputMethodManagerService service in the input method system service obtains an input type of an input box of the current interface from a client process. Specifically, when an input area (such as an input box) obtains an input focus and enables an input method, the system invokes onStartInputView(), and introduces an Editorlnfo object parameter that includes details about the input type and another text area attribute. In this object, an inputType field includes an input type of the text area. The inputType field is an integer variable, and includes various input type settings that are indicated based on a bit rule. Common input types include a number, a date, a phone number, a password, and the like. android:inputType is used to set a text type, and is used to help the input method to display a proper keyboard type. A TextView input manner may be changed to Password by using a setInputType function, so as to enter a password. Hiding or displaying a password may be implemented by setting a setTransformationMethod() method of EditText, for example, a password may be displayed by using a "*" symbol. When it is determined that the current interface is in a password entering state, a window view of an input method process may receive the user input information, and then the input information is displayed by using the UI control of the client process.

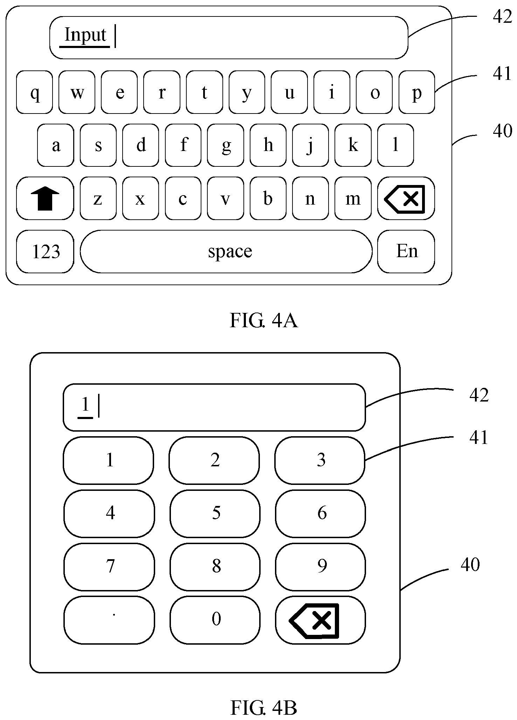

Refer to FIG. 4A and FIG. 4B for an input method interface 40 of a soft keyboard. Various keys 41 are displayed in a view area, including letter keys, number keys, symbol keys, function keys, and the like. A touchscreen receives a user's touch input, determines a corresponding key 41 according to location coordinate information of the user's touch input, and then displays input information corresponding to the key 41 in an input box 42. It may be understood that, an input interface of the soft keyboard may have multiple forms, and key distribution of the soft keyboard may also be different from a standard keyboard. When detecting that the user touches a key 41 on the soft keyboard, the touchscreen obtains location coordinate information of the key pressed by the user and a pressure value. A specific key value corresponding to current user input may be calculated according to the location coordinate information, and then a system interface is invoked to submit key information entered by the user. Usually, the input method uses a key value, and seldom uses pressure information. In this embodiment of the present invention, the pressure information is fully used to enhance security during password entering. It should be noted that, the foregoing pressure information refers to only pressure information of a character key that forms a password sequence, and key pressure information that is not a password entering type is not taken into account, for example, a pressure value of a function key does not affect a final input result. It may be understood that, when the soft keyboard is used to enter a password, the input box 42 may not display an actual entered character, and specifically, may hide the entered character, or may display a "*" symbol or another character unrelated to the entered character, to prevent password disclosure.

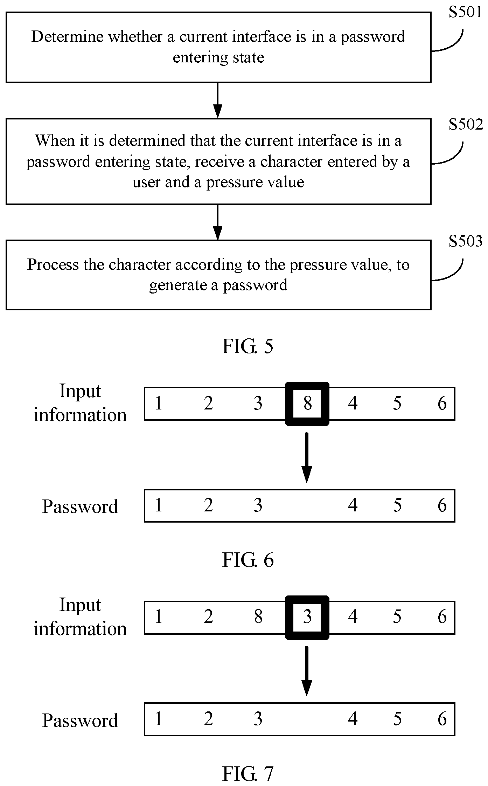

Referring to FIG. 5, an embodiment of the present invention provides a method for generating a password by means of press touch. The method may be implemented by the devices (such as the mobile phone 100) having a touch input function in the foregoing embodiment. The method specifically includes the following steps.

S501. A device determines whether a current interface is in a password entering state.

The current interface may be a user interface having an input focus (Input Focus). When a user interface can receive information entered by a user by using an input device such as a pressure-sensitive touchscreen, a keyboard, and a mouse, it is considered that the user interface has an input focus. In some embodiments, the current interface is also referred to as an active window, and is an activated user interface that can receive a user's input. Usually, the current interface may be a visible window in a foreground, so that the user can view or enter information. For a device that can present multiple windows at the same time (for example, a screen split function of a tablet computer, that is, a screen is split into two display areas, and the two display areas respectively display two different interfaces), the current interface may be an interface having an input focus; a rest interface does not have an input focus even if it is visible, and therefore, it is not the current interface.

An Android operating system is used as an example. The user interface is usually implemented by using an activity component, and one activity includes one or more views (View), such as various buttons (Button) and icons (Icon), to implement interaction with the user. The Acitivity performs management by using an Acitivity Stack. When a new activity is enabled, a system invokes an onCreate() function to implement initialization of a window component, and the activity is placed at a stack top and becomes a running activity to receive a user's input, so as to become a current interface. An activity has four states: active (active/running), paused (paused), stopped (stopped), and inactive (inactive/destroyed). A user interface that is in a running (running) state may be referred to as a current interface. The current interface is in the foreground, and can be seen by the user and has an input focus.

The current interface may have an input box, to receive and display the user's input. The device may determine whether the current interface is in a password entering state according to an input box type. A device that runs an Android operating system is used as an example, and the device determines the input box type according to an InputType mark of the input box. For example, when the device finds that the input box type is android:inputType="phone", it indicates that an input type is phone number input; when the device finds that the input box type is android:inputType="text", it indicates that the input type is text input; similarly, in the Android operating system, when the device finds that the input box type is android:inputType="textPassword", the device determines that the current interface is in a password entering state. In a password entering state, the device may receive the user's input, and generate a password. Optionally, to avoid password disclosure, the input box of the current interface of the device may not display an actual entered character, for example, may hide the entered character, or may display a "*" symbol, a "•" symbol, or another character unrelated to the entered character. If determining, according to the input box type, that the current interface is not in a password entering state, such as the foregoing phone number input type or text input type, the device adjusts an input mode of an input method according to the input box type of the current interface. Optionally, an entered character may be displayed in a plain text.

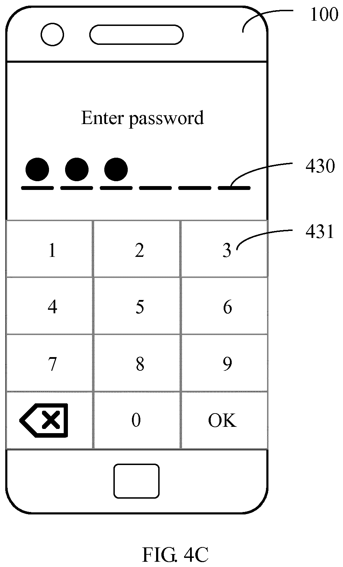

The mobile phone 100 is used as an example, and a possible password entering state is shown in FIG. 4C. A current interface includes an input box 430 and a soft keyboard 431. The input box 430 is used to receive a character entered by the user, and determines, according to an input box type, whether the current interface is in a password entering state. The Android operating system is used as an example, and if the input box type is android:inputType="textPassword", the mobile phone 100 determines that the current interface is in a password entering state. The soft keyboard 431 may allow the user to touch the pressure-sensitive touchscreen to enter a character, and submit the entered character to the input box 430. Optionally, to prevent password disclosure, the entered character is displayed as a "•" symbol or another character unrelated to the entered character. It may be understood that, although a number soft keyboard is used as an example in FIG. 4C, a soft keyboard that includes a letter and a special character is also applicable; although a 6-digit password is used as an example in FIG. 4C, a password sequence having another length is also applicable. In addition, a rule of pattern unlocking is similar to that of number unlocking in FIG. 4C. During pattern unlocking, a pattern is also distributed at different locations, but continuous sliding is required. Therefore, the method in this embodiment of the present invention is also applicable to pattern unlocking, and pressure value information, such as light press or hard press, may also be added when the pattern slides to a corresponding location
S502. When determining that the current interface is in a password entering state, the device receives user input information, where the input information includes a character and a pressure value generated when the character is entered.

When the device determines that the current interface is in a password entering state, for example, when an Android-powered device finds that the input box type is android:inputType="textPassword", the device may invoke an input method process, display a soft keyboard on the current interface, and receive the user input information. The Android operating system is used as an example. The user enables an application that needs to invoke an input method. When the input box obtains an input focus, a client application (CA) instructs an input method manager (IMM) to enable the input method, and then the IMM checks a currently selected input method editor (IME), and invokes the IME. When the user submits input, the IME transfers input information to the CA to complete input.

The foregoing input information includes the character and the pressure value generated when the character is entered, and the pressure value is a pressure value generated when the user enters the character. When the user taps a key of the soft keyboard, the device may receive a touch location by using the touchscreen. Each touch location is corresponding to one character on the soft keyboard, and therefore, the device can determine, according to the touch location of the user, a character entered by the user. A pressure-sensitive touchscreen may measure a pressure value entered by the user each time, and the pressure value is in a one-to-one correspondence with an entered character. The foregoing input information may be stored in a storage 120 of the device, and more specifically, may be stored in a cache of the device for processing in S503.

The touchscreen may detect the pressure value entered by the user, or may obtain the pressure value by detecting a contact area between a finger and the touchscreen when the user presses the touchscreen. Optionally, when the user presses the touchscreen, the touchscreen may provide a pressure feedback for the user according to a size of the pressure value. Optionally, the feedback may be a tactile feedback, to ensure that only the user that currently performs input can feel the feedback, such as vibration. There are multiple methods to obtain the pressure value by the device. The Android operating system is used as an example. After detecting the user's pressing, a pressure sensor of the touchscreen invokes a getPressure method of MotionEvent Class, to obtain a size of the user's input pressure value. If the pressure value is obtained by detecting the contact area between a finger and the touchscreen, after detecting the user's pressing, the pressure sensor of the touchscreen invokes a getSize method of the MotionEvent Class, to obtain a value of the contact area between the finger and the touchscreen. The value of the contact area is standardized to a value from 0 to 1 by using the getSize method. The value may indirectly indicate a size of the input pressure value, that is, a larger contact area between the finger and the touchscreen indicates a larger force pressed by the user. It should be understood that, the device may also invoke another interface function to detect the pressure value, and this is not limited herein. In some embodiments of the present invention, a preset pressure value threshold may be used to determine a force pressed by the user. When a pressure value entered by the user is greater than the threshold, the input is considered as a hard press; when the pressure value entered by the user is less than the threshold, the input is considered as a light press. Optionally, when there is a hard press, the touchscreen may provide a vibration feedback for the user, and when there is a light press, the touchscreen may not provide a vibration feedback for the user.

In some embodiments of the present invention, (X, Y) is used to indicate user input information. X indicates a character entered by the user, Y indicates an input pressure value corresponding to the character, and (Xₙ, Yₙ) indicates a character and a pressure value that are entered for an n^{th} time by the user. For ease of description, the pressure value Y herein is not an actual value that uses a mechanical unit "Newton (N)" as a unit, but is a relative value that is defined relative to a preset unit pressure value. A larger value Y indicates a larger corresponding actual pressure value. For example, input information (1, 2) indicates that a character entered by the user is 1, and a relative pressure value is 2. In some embodiments of the present invention, Yₘₐₓ is used to indicate a preset pressure value threshold, and similarly, the pressure value threshold is also a relative value.

S503. The device processes the character according to the pressure value, to generate a password.

The device processes each character according to a pressure value corresponding to the character, to generate the password. A password processing algorithm may be preset, and be stored in a storage. The storage includes a local storage 120 and a network side storage. Obtaining a password generation algorithm from the network side storage may specifically include the following: The device accesses a network server by using a wireless network or a wired network, and obtains a preset password generation algorithm from a storage of the network server. The password generation algorithm is one or more default algorithms on the device or one or more algorithms updated by using a network. If there are multiple password generation algorithms, after obtaining the password generation algorithms, the device generates the password according to a password generation algorithm selected by the user. Optionally, the user may be reminded of a currently applicable password generation algorithm in a manner such as text, picture, audio, or video in the user's password entering process, and a password generation algorithm selected by the user is used as a finally applicable password generation algorithm. Further, to confuse a peeper, content for reminding may be disguised. For example, a reminding rule played by audio is disguised, a real rule is displayed at a screen corner, and the real rule is the finally applicable password generation algorithm.

Optionally, the selecting a password generation algorithm may specifically include:
S5031. The device determines a finger used by the user to enter information. Specifically, the device may determine, by using a camera, the finger used by the user to enter the information, or may determine, according to a difference of a fingerprint area of pressing the touchscreen by each finger, the finger used by the user to enter the information. Certainly, for convenience, the device only needs to determine a finger used by the user to enter information at the first time.

S5032. The device invokes a corresponding password generation algorithm according to a different finger. For example, if the user uses a thumb to enter information (a character and a pressure value), a password generation algorithm 1 may be invoked to process the entered information, so as to generate a password; or if the user uses a forefinger to enter information (a character and a pressure value), a password generation algorithm 2 may be invoked to process the entered information, so as to generate a password.

In this way, different password generation algorithms can be invoked at any time according to different cases, and therefore, security and convenience are greatly improved during password entering.

It should be noted that, a time of obtaining the password generation algorithm by the device may be any moment before the password is generated. For example, the password generation algorithm may be obtained before the user's input is received, or the password generation algorithm may be obtained during the user's input, or the password generation algorithm may be obtained after the user's input ends. The user's input may be singly processed or processed in group during an input process, or may be processed together after the input is complete. A password generated after the user input is processed by using the password generation algorithm may not include a pressure value, so that the password is compatible with a conventional password storage system and a common device having a touchscreen. Certainly, in some other embodiments of the present invention, the password generated after the user input is processed by using the password generation algorithm may include a pressure value. In this case, password security is higher.

Optionally, the password obtained after the user input is processed by using the password generation algorithm is submitted to the device, and specifically, may be submitted to a password entering box. After receiving the password, the device compares the password with a preset correct password, to verify whether the password is correct. If the password is the same as the preset correct password, the password is correct. It should be noted that, being the same herein means that a requirement of the correct password is satisfied, and not necessarily means that all characters of the two are the same. For example, in some password determining rules, a letter is case insensitive, and if only a letter case is different between the two, the requirement is still satisfied. The foregoing verification process may be completed locally by the device, or may be completed by connecting to a network server by the device. After the password is verified, the device may perform a preset operation. For example, when an entered password is correct, a mobile phone interface may be entered, an application may be unlocked, a door may be unlocked, a payment may be completed, and the like, and when an entered password is wrong, a password needs to be entered again and the like. Details are not described herein.

In this embodiment of the present invention, the pressure information is obtained by using the touchscreen, when it is determined that a current interface is in a password entering state, a password anti-peeping function is enabled, and the user input information is processed according to a preset password generation algorithm. Even if a person remembers all key input of the user, the person cannot learn a finally generated password, so that the anti-peeping function is implemented.

Multiple password generation algorithms are described below. It should be particularly noted that, although a number password is used as an example in the following embodiments, a password entry that includes a letter and a special character is also applicable (certainly, input that is not a password entering type is not applicable, for example, a function key that does not form a password sequence). Although a 6-digit password is used as an example in the following embodiments, a password sequence having another length is also applicable. A person skilled in the art should be further reminded that, the following password generation algorithm is applicable to all cases in which a touchscreen is used to enter a password, and is applicable to all devices having a touchscreen, such as the mobile phone 100.

Referring to FIG. 6, a possible password generation algorithm is as follows: The input information is (Xₙ, Yₙ), where Xₙ is an entered character, Yₙ is a pressure value corresponding to Xₙ, and n is a natural number. That the device processes the character according to the pressure value, to generate a password is specifically as follows: The device determines whether Yₙ is less than a preset first threshold Yₘₐₓ₁; and when determining Yₙ<Yₘₐₓ₁, the device generates a password Xₙ. Alternatively, the foregoing password generation algorithm may be expressed as follows: The device removes a character whose input pressure value is greater than the preset first threshold, and generates a password according to a character whose pressure value is less than the first threshold. Alternatively, the foregoing password generation algorithm may be expressed as follows: The device determines whether a pressure value corresponding to each character is less than the preset first threshold, and the device generates a password according to a character whose pressure value is less than the first threshold.

The preset threshold may be set by the user, or may be preset at factory delivery of the device, or may be adjusted by the device according to a pressure value of the user's daily operation. The device determines whether a pressure value of each character entered by the user is less than the preset first threshold, and when pressure values of some characters entered by the user are greater than the preset first threshold, the device determines that these characters whose input pressure values are greater than the preset first threshold are invalid, and generates a password according to a character whose input pressure value is less than the preset first threshold. Optionally, there may be one or more characters whose input pressure values are greater than the preset first threshold. When there are multiple characters whose input pressure values are greater than the preset first threshold, these characters whose input pressure values are greater than the preset first threshold may be consecutive, or may be inconsecutive. Optionally, the user may enter a password in a reverse order. This is also applicable to another password generation algorithm below.

It may be understood that, a criterion for determining an input pressure value by the device is flexible. For example, a determining criterion may be: determining whether a pressure value of each character entered by the user is greater than or equal to the preset first threshold. When pressure values of some characters entered by the user are greater than or equal to the preset first threshold, the device determines that these characters whose input pressure values are greater than or equal to the preset first threshold are invalid, and generates a password according to a character whose input pressure value is less than the preset first threshold. Alternatively, for another example, a determining criterion may be: determining whether a pressure value of each character entered by the user is less than the preset first threshold. When pressure values of some characters entered by the user are less than the preset first threshold, the device determines that these characters whose input pressure values are less than the preset first threshold are invalid, and generates a password according to a character whose input pressure value is greater than or equal to the preset first threshold. Alternatively, for another example, a determining criterion may be: determining whether a pressure value of each character entered by the user is less than or equal to the preset first threshold. When pressure values of some characters entered by the user are less than or equal to the preset first threshold, the device removes these characters whose input pressure values are less than or equal to the preset first threshold, and generates a password according to a character whose input pressure value is greater than the preset first threshold. This is also applicable to a pressure value determining criterion of another password generation algorithm below, and details are not further described.

The first line in FIG. 6 indicates user input information, the second line indicates a password generated after the user input information is processed by using the password generation algorithm, and a character with a thick box indicates that an input pressure value of the character is greater than the preset first threshold. For example, a correct password is 1, 2, 3, 4, 5, 6, the preset first threshold of the pressure value is Yₘₐₓ₁=5, and the user input information is separately (X₁, Y₁)=(1, 2), (X₂, Y₂)=(2, 2), (X₃, Y₃)=(3, 1), (X₄, Y₄)=(8, 6), (X₅, Y₅)=(4, 3), (X₆, Y₆)=(5, 2), and (X₇, Y₇)=(6, 3). Because the pressure value (Y₄=6) used for the fourth input is greater than the preset first threshold (Yₘₐₓ₁=5), the character (X₄=8) entered in the fourth input is invalid. A password is generated according to characters (X₁, X₂, X₃, X₅, X₆, X₇) whose input pressure values are less than Yₘₐₓ₁, and a finally generated password (X₁, X₂, X₃, X₅, X₆, X₇)=(1, 2, 3, 4, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

Referring to FIG. 7, another possible password generation algorithm is as follows: The input information is (Xₙ₋₁, Yₙ₋₁) and (Xₙ, Yₙ), where Xₙ₋₁ and Xₙ are entered characters, Yₙ₋₁ and Yₙ are pressure values respectively corresponding to Xₙ₋₁ and Xₙ, and n is a natural number. That the device processes the character according to the pressure value, to generate a password is specifically as follows: The device determines whether Yₙ is greater than a preset seventh threshold Yₘₐₓ₇; and when determining Yₙ>Yₘₐₓ₇, the device generates a password Xₙ. Alternatively, the foregoing password generation algorithm may be expressed as: using a character whose input pressure value is greater than the preset seventh threshold to replace a character followed by the character. Alternatively, the foregoing password generation algorithm may be expressed as follows: The device determines whether a pressure value of each character entered by the user is greater than the preset seventh threshold. When pressure values of some characters entered by the user are greater than the preset seventh threshold, the device determines that a character followed by these characters is invalid, and generates a password according to other characters other than the invalid character (that is, other characters other than the character followed by these characters, including characters whose pressure values are greater than or equal to the preset seventh threshold), thereby achieving effects of using a character whose input pressure value is greater than or equal to the preset seventh threshold to replace a character followed by the character. Optionally, there may be one or more characters whose input pressure values are greater than or equal to the preset seventh threshold, and the one or more characters are used to replace a same quantity of characters before or after the one or more characters. It may be understood that in this embodiment, a character whose input pressure value is greater than the preset seventh threshold may also be used to replace a character following the character.

The first line in FIG. 7 indicates user input information, the second line indicates a password generated after the user input information is processed by using the password generation algorithm, and a character with a thick box indicates that an input pressure value of the character is greater than the preset seventh threshold. For example, a correct password is 1,2, 3, 4, 5, 6, the preset seventh threshold of the pressure value is Yₘₐₓ₇=5, and the user input information is separately (X₁, Y₁)=(1, 2), (X₂, Y₂)=(2, 3), (X₃, Y₃)=(8, 3), (X₄, Y₄)=(3, 7), (X₅, Y₅)=(4, 3), (X₆, Y₆)=(5, 2), and (X₇, Y₇)=(6, 3). Because the pressure value (Y₄=7) used for the fourth input is greater than the preset seventh threshold (Yₘₐₓ₇=5), the character (X₄=3) entered in the fourth input is used to replace the character (X₃=8) followed by the character, and a finally generated password (X₁, X₂, X₄, X₅, X₆, X₇)=(1, 2, 3, 4, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

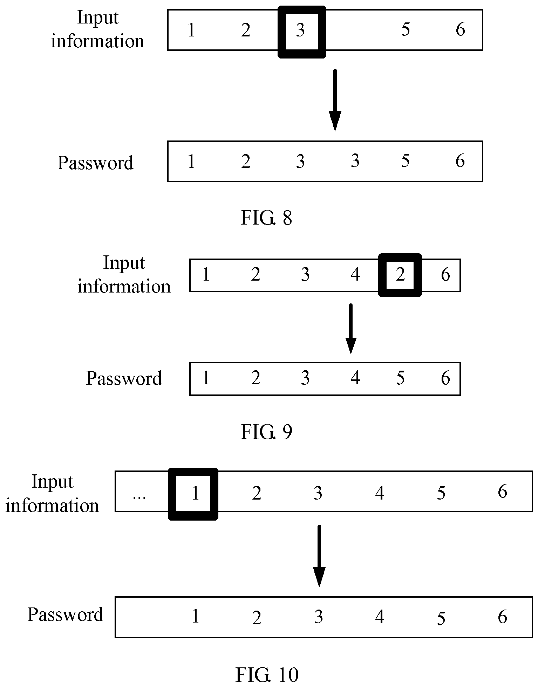

Referring to FIG. 8, another possible password generation algorithm is as follows: The input information is (Xₙ, Yₙ), where Xₙ is an entered character, Yₙ is a pressure value corresponding to Xₙ, and n is a natural number. That the device processes the character according to the pressure value, to generate a password is specifically as follows: The device determines whether Yₙ is greater than a preset second threshold Yₘₐₓ₂; and when determining Yₙ>Yₘₐₓ₂, the device generates a password Xₙ, Xₙ. Alternatively, the foregoing password generation algorithm may be expressed as: repeatedly entering a character whose input pressure value is greater than the preset second threshold. Alternatively, the foregoing password generation algorithm may be expressed as follows: The device determines whether a pressure value corresponding to each character is greater than the preset second threshold, and the device repeatedly enters a character whose pressure value is greater than the second threshold, to generate a password. There may be one or more characters whose pressure values are greater than the preset second threshold, and there may be one or more repeated entering times.

The first line in FIG. 8 indicates user input information, the second line indicates a password generated after the user input information is processed by using the password generation algorithm, and a character with a thick box indicates that an input pressure value of the character is greater than the preset second threshold. For example, a correct password is 1, 2, 3, 3, 5, 6, the preset second threshold of the pressure value is Yₘₐₓ₂=5, and the user input information is separately (X₁, Y₁)=(1, 2), (X₂, Y₂)=(2, 3), (X₃, Y₃)=(3, 7), (X₄, Y₄)=(5, 1), and (X₅, Y₅)=(6, 3). Because the pressure value (Y₃=7) used for the third input is greater than the preset second threshold (Yₘₐₓ₂=5), the character (X₃=3) entered in the third input is repeatedly entered, and a finally generated password (X₁, X₂, X₃, X₃, X₄, X₅)=(1, 2, 3, 3, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a touchscreen.

Referring to FIG. 9, another possible password generation algorithm is: changing a character whose input pressure value is greater than a preset ninth threshold according to a preset rule. The device determines whether a pressure value of each character entered by the user is greater than the preset ninth threshold, and when pressure values of some characters entered by the user are greater than the preset ninth threshold, changes these characters whose pressure values are greater than the preset ninth threshold according to the preset rule. The preset rule is extremely broad, for example, a previous or a subsequent value in a character sequence list, previous multiple values or subsequent multiple values, or subtracting an entered value from a particular fixed value. The sequence list may be a number table from 0 to 9 or an alphabet from A to Z, and the sequence list may be in a positive order or in a reverse order. For example, a possible password generation algorithm may be as follows: The input information is (Xₙ, Yₙ), where Xₙ is an entered character, Yₙ is a pressure value corresponding to Xₙ, and n is a natural number. That the device processes the character according to the pressure value, to generate a password is specifically as follows: The device determines whether Yₙ is greater than the preset ninth threshold Yₘₐₓ₉; and when determining Yₙ>Yₘₐₓ₉, the device generates a password that is a number in the ones place of a sum of Xₙ and 3 (that is, the third value following Xₙ in the number table from 0 to 9).

The first line in FIG. 9 indicates user input information, the second line indicates a password generated after the user input information is processed by using the password generation algorithm, and a character with a thick box indicates that an input pressure value of the character is greater than the preset ninth threshold. For example, a correct password is 1, 2, 3, 4, 5, 6, the preset ninth threshold of the pressure value is Yₘₐₓ₉=5, the preset rule is a subsequent third value in the number table from 0 to 9, and the user input information is separately (X₁, Y₁)=(1, 2), (X₂, Y₂)=(2, 3), (X₃, Y₃)=(3, 2), (X₄, Y₄)=(4, 1), (X₅, Y₅)=(2, 6), and (X₆, Y₆)=(6, 2). Because the pressure value (Y₅=6) used for the fifth input is greater than the preset ninth threshold (Yₘₐₓ₉=5), X₅ obtained by means of processing according to the foregoing preset rule is the third value (that is, 5) following the original value (the original X₅ is 2), and a finally generated password (X₁, X₂, X₃, X₄, X₅, X₆)=(1, 2, 3, 4, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

Referring to FIG. 10, another possible password generation algorithm is as follows: The input information is specifically (X₁, Y₁), (X₂, Y₂), ..., (Xₖ₋₁, Yₖ₋₁), (Xₖ, Yₖ), (Xₖ₊₁, Yₖ₊₁), ..., and (Xₙ, Yₙ), X₁, X₂, ..., Xₖ₋₁, Xₖ, Xₖ₊₁, ..., and Xₙ are entered characters, Y₁, Y₂, ..., Yₖ₋₁, Yₖ, Yₖ₊₁, ..., and Yₙ are pressure values corresponding to the characters, k and n are natural numbers, and n≥k>1. That the device processes the character according to the pressure value, to generate a password is specifically as follows: The device determines whether Y₁, Y₂, ..., Yₖ₋₁, Yₖ, Yₖ₊₁, ..., and Yₙ are greater than a preset third threshold Yₘₐₓ₃; and when determining that Yₖ₋₁ is the first pressure value greater than the third threshold Yₘₐₓ₃, the device generates a password Xₖ₋₁, Xₖ, Xₖ₊₁, ..., Xₙ. Alternatively, the foregoing rule may be expressed as: using a character whose input pressure value is greater than the preset third threshold as a starting entered character, and using a character entered previously as an invalid character. Alternatively, the foregoing rule may be expressed as follows: The device determines whether a pressure value corresponding to each character is greater than the preset third threshold, and the device generates a password according to the first character whose pressure value is greater than the third threshold and a character following the first character. It may be understood that, the character whose pressure value is greater than the preset third threshold herein may also be used as a sign indicating that a password is to be entered, and a character entered after the character is used to generate the password, and a string of invalid characters may be entered after the last password is entered, to make an anti-peeping function better take effect, and the like.

The first line in FIG. 10 indicates user input information, the second line indicates a password generated after the user input information is processed by using the password generation algorithm, and a character with a thick box indicates that an input pressure value of the character is greater than the preset third threshold. For example, a correct password is 1, 2, 3, 4, 5, 6, the preset third threshold of the pressure value is Yₘₐₓ₃=5, the user first enters n invalid characters, and starting from an (n+1)^{th} character, the input information is successively (Xₙ₊₁, Yₙ₊₁)=(1, 6), (Xₙ₊₂, Yₙ₊₂)=(2, 3), (Xₙ₊₃, Yₙ₊₃)=(3, 2), (Xₙ₊₄, Yₙ₊₄)=(4, 1), (Xₙ₊₅, Yₙ₊₅)=(5, 3), and (Xₙ₊₆, Yₙ₊₆)=(6, 2). Because the pressure value (Yₙ₊₁=6) used for the (n+1)^{th} input is greater than the preset third threshold (Yₘₐₓ₃=5), Xₙ₊₁ is used as a starting entered character, and a finally generated password (Xₙ₊₁, Xₙ₊₂, Xₙ₊₃, Xₙ₊₄, Xₙ₊₅, Xₙ₊₆)=(1, 2, 3, 4, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

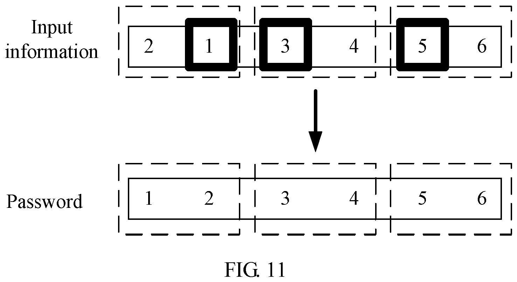

Referring to FIG. 11, still another possible password generation algorithm is as follows: The input information is specifically (X₁, Y₁) and (X₂, Y₂), X₁ and X₂ are entered characters, and Y₁ and Y₂ are pressure values corresponding to the characters. That the device processes the character according to the pressure value, to generate a password is specifically as follows: The device determines whether Y₁ is greater than or less than Y₂; and if Y₂>Y₁, generates a password X₂, X₁; or if Y₂≤Y₁, generates a password X₁, X₂. Alternatively, the foregoing rule may be expressed as follows: The device compares pressure values corresponding to two adjacent characters; if a pressure value corresponding to a latter character is greater than a pressure value corresponding to a former character, transposes the two characters; or if a pressure value corresponding to a latter character is less than or equal to a pressure value corresponding to a former character, remains an order of the two characters; and generates a password. Every two characters may be grouped into one group according to a sequence of the characters entered by the user, an order of two characters in each group is adjusted according to pressure values corresponding to the two characters, and a password is generated according to an adjusted order. The foregoing adjusting an order of characters may be specifically: when an input pressure value of a latter character in one group is greater than an input pressure value of a former character, transposing the two characters; otherwise, remaining an order of the two characters. It may be understood that, grouping and sorting herein are related to all cases in which whether to transpose two characters is determined after input pressure values of the two characters are compared. For example, it may be set that when an input pressure value of a former character in a group is greater than that of a latter character, the two characters are transposed; or the first character and the third character may be grouped into one group, or the like.

The first line in FIG. 11 indicates user input information, the second line indicates a password generated after the user input information is processed by using the password generation algorithm, a dashed box indicates one group, every two pieces of input information in the figure are one group, and there are three groups in total. In each group, a character with a thick box indicates that an input pressure value of the character is greater than an input pressure value of the other character in the group. For example, a correct password is 1, 2, 3, 4, 5, 6, and adjusting an order of characters is specifically: when an input pressure value of a latter character in one group is greater than an input pressure value of a former character, transposing the two characters; otherwise, remaining an order of the two characters. The user input information is separately (X₁, Y₁)=(2, 2), (X₂, Y₂)=(1, 3), (X₃, Y₃)=(3, 2), (X₄, Y₄)=(4, 1), (X₅, Y₅)=(5, 4), and (X₆, Y₆)=(6, 1). In the first group, because Y₁<Y₂ (2<3), X₁ and X₂ are transposed; in the second group, because Y₃>Y₄ (2>1), an order of X₃ and X₄ is not changed; and in the third group, because Y₅>Y₆ (4>1), an order of X₅ and X₆ is not changed. Therefore, a finally generated password (X₂, X₁, X₃, X₄, X₅, X₆)=(1, 2, 3, 4, 5, 6) is the same as the correct password. It can be learned that, by means of processing of the password generation algorithm, even if a password entering process is peeped by a person, the person cannot know a finally generated password, so that a purpose of anti-peeping is achieved. In addition, the finally generated password does not include pressure value information, is totally compatible with an existing password storage system, and may be used for unlocking of various devices having a pressure-sensitive touchscreen.

It can be learned from the foregoing embodiments that, the password generation algorithms are extremely flexible and diversified, and combinations thereof and equivalent replacements are hardly exhaustive. A person of ordinary skill in the art may obtain more available methods according to the idea in the embodiments of the present invention, and all these methods fall within the protection scope of the present invention.

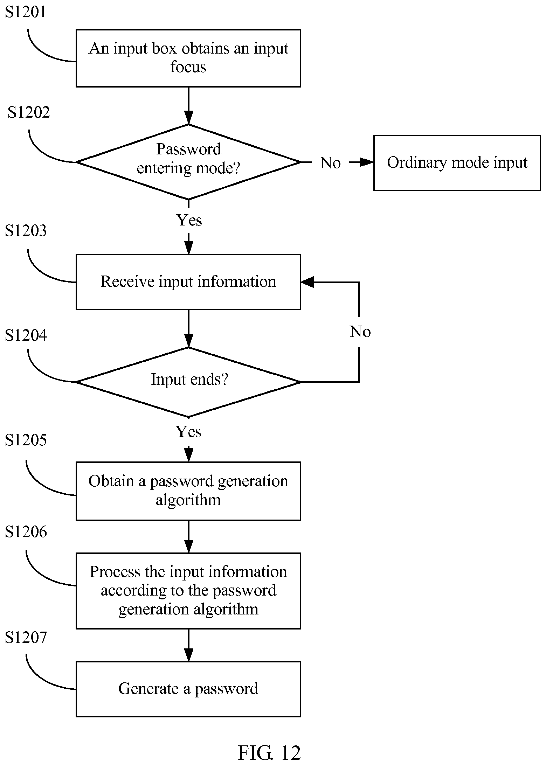

FIG. 12 is a schematic diagram of an anti-peeping method for a mobile phone, and is a specific example of the foregoing method for generating a password by means of press touch. Steps of the anti-peeping method for a mobile phone are as follows:
S1201. An input box obtains an input focus. The input box is used to receive a user's input. For a mobile phone having a pressure-sensitive touchscreen, when the user taps the input box, the input box obtains an input focus, and invokes an input method. Optionally, invoking the input method is specifically: presenting a soft keyboard on a current interface, to receive the user's input.

S1202. Determine whether a password entering mode is enabled. The mobile phone may determine, according to an input box type, whether a password entering mode is enabled. An Android operating system is used as an example. When the input box type is android:inputType="textPassword", a device determines that a password entering mode is enabled. If a password entering mode is enabled, S1203 is performed; or if a password entering mode is not enabled, an input mode of the input method is adjusted according to the input box type of the current interface, for example, a text input mode and a phone number input mode.

S1203. Receive input information. The mobile phone receives the user's touch input on the soft keyboard of the input method, and obtains an entered character and a pressure value.

Obtaining the character is specifically: obtaining a touch position of the user, and parsing a character corresponding to the touch position. Optionally, after obtaining the touch-entered character and the pressure value, the mobile phone caches the character and the pressure value into a memory of the mobile phone.

S1204. Determine whether an input ends. Optionally, if the user presses an Enter key (Enter key) or closes the input method, the input ends. If the input ends, S1205 is performed; or if the input does not end, S1203 continues to be performed to receive the input information.

S1205. Obtain a password generation algorithm. The password generation algorithm is one or more preset algorithms stored in a storage of the mobile phone or a storage on a network side. It should be noted that, in the specific example, a password is processed after the password is completely entered. Alternatively, as described above, a password may be processed when being entered. Details are not described herein.

S1206. Process the input information according to the password generation algorithm. A character and a pressure value corresponding to each character that are cached in a memory list are processed according to the password generation algorithm.

S1207. Generate a password. The password is generated after the input information is processed by using the password generation algorithm. Optionally, the password may be transferred to a password entering box of a client process by using an InputConnnection interface, to complete an anti-peeping input of the password.

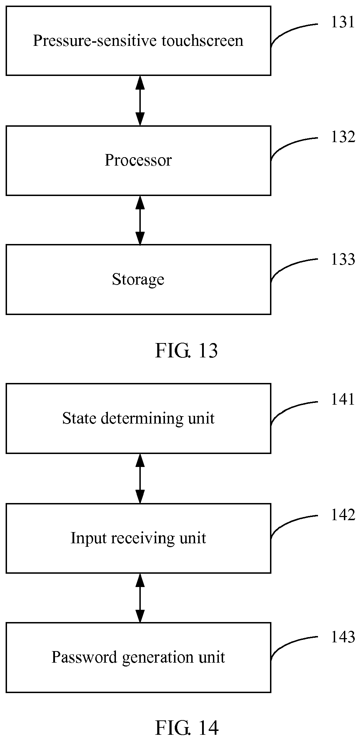

In addition, referring to FIG. 13, an embodiment of the present invention provides an apparatus, including a pressure-sensitive touchscreen 131, a processor 132, and a storage 133. The processor 132 determines whether a current interface is in a password entering state, and if the processor 132 determines that the current interface is in a password entering state, the pressure-sensitive touchscreen 131 receives user input information, where the input information includes a character and a pressure value generated when the character is entered. The processor 132 processes the character according to the pressure value, to generate a password. A password generation algorithm is stored in the storage 133. A specific method is the same as the foregoing method for generating a password by means of press touch.

In addition, an embodiment of the present invention provides an apparatus, including a pressure-sensitive touchscreen, one or more processors, a storage, and one or more programs. The one or more programs are stored in the storage, and are executed by the one or more processors, the one or more programs include an instruction, and the instruction is used by a device to determine whether a current interface is in a password entering state; by the device to receive user input information when determining that the current interface is in a password entering state, where the input information includes a character and a pressure value generated when the character is entered; and by the device to process the character according to the pressure value, to generate a password. A specific method is the same as the foregoing method for generating a password by means of press touch.

In addition, referring to FIG. 14, an embodiment of the present invention further provides an apparatus for generating a password by means of press touch, including a state determining unit 141, an input receiving unit 142, and a password generation unit 143. The state determining unit 141 determines whether a current interface is in a password entering state; when the state determining unit 141 determines that the current interface is in a password entering state, the input receiving unit 142 receives user input information, where the input information includes a character and a pressure value generated when the character is entered; and the password generation unit 143 processes the character according to the pressure value, to generate a password. A specific method is the same as the foregoing method for generating a password by means of press touch.

In addition, an embodiment of the present invention further provides a storage medium, configured to store a computer software instruction. The instruction is used by a device to determine whether a current interface is in a password entering state; when determining that the current interface is in a password entering state, the device receives user input information, where the input information includes a character and a pressure value generated when the character is entered; and the device processes the character according to the pressure value, to generate a password. A specific method is the same as the foregoing method for generating a password by means of press touch.

A person of ordinary skill in the art may understand that, in combination with the examples described in the embodiments disclosed in this specification, units, rules and method steps can be implemented by a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It should be understood that, the term "and/or" used in this specification indicates and includes any or all possible combinations of one or more items in associated listed items. It should be further understood that the term "include" and/or "include" used in this specification specifies presence of features, integers, steps, operations, elements, and/or components, with presence or addition of one or more other features, integers, steps, operations, elements, components, and/or their combinations not excluded.

The terms used in the description of the present invention in this specification are merely for the purpose of describing specific embodiments, and are not intended to limit the present invention. The terms "one", "a" and "this" of singular forms used in this specification and the appended claims of the present invention are also intended to include plural forms, unless otherwise specified in the context clearly.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention. Functional units in the embodiments of the present invention may be integrated into one processing unit, or each of the units may exist alone physically, or two or more units are integrated into one unit.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for generating a password by means of press touch, wherein the method comprises:
determining (S501), by a device, whether a current interface is in a password entering state;
when determining that the current interface is in a password entering state, receiving (S502), by the device, user input information, wherein the input information comprises a character and a pressure value generated when the character is entered; and
processing (S503), by the device, the character according to the pressure value, to generate a password, wherein the input information is (Xₙ, Yₙ), Xₙ is an entered character, Yₙ is a pressure value corresponding to Xₙ, and n is a natural number; and
the processing, by the device, the character according to the pressure value, to generate a password is specifically:
determining, by the device, whether Yₙ is greater than a preset threshold Yₘₐₓ₂; and
when determining Yₙ>Yₘₐₓ₂, generating, by the device, a password Xₙ, Xₙ, wherein Xₙ, Xₙ denotes repeatedly entering the character Xₙ.

2. The method according to claim 1, wherein the current interface is a user interface having an input focus.

3. The method according to claim 1 or 2, wherein the determining, by a device, whether a current interface is in a password entering state is specifically: determining, by the device, whether the current interface is in a password entering state according to an input box type of the current interface.

4. The method according to claim 3, wherein the method further comprises: when the device obtains that the input box type is android:inputType="textPassword", determining, by the device, that the current interface is in a password entering state.

5. The method according to claim 1, wherein the method further comprises: when determining that the current interface is not in a password entering state, adjusting, by the device, an input mode of an input method according to an input box type of the current interface.

6. The method according to claim 1, wherein the method further comprises: verifying, by the device, the generated password.

7. The method according to claim 1, wherein the processing, by the device, the character according to the pressure value specifically comprises: if there are multiple password generation algorithms, generating a password according to a password generation algorithm selected by a user.

8. An apparatus for generating a password by means of press touch, wherein the apparatus comprises a state determining unit (141), an input receiving unit (142), and a password generation unit (143), wherein
the state determining unit (141) is configured to determine whether a current interface is in a password entering state;
the input receiving unit (142) is configured to: when the state determining unit (141) determines that the current interface is in a password entering state, receive user input information, wherein the input information comprises a character and a pressure value generated when the character is entered; and
the password generation unit (143) is configured to process the character according to the pressure value, to generate a password, wherein the input information is (Xₙ, Yₙ), Xₙ is an entered character, Yₙ is a pressure value corresponding to Xₙ, and n is a natural number; and
the password generation unit (143), is specifically configured to:
determine, whether Yₙ is greater than a preset threshold Yₘₐₓ₂; and when determining Yₙ>Yₘₐₓ₂,
generate a password Xₙ, Xₙ, wherein Xₙ, Xₙ denotes repeatedly entering the character Xₙ.

## Patentansprüche

1. Verfahren zur Erstellung eines Passworts mit Hilfe von Druckberührung, wobei das Verfahren umfasst:
Bestimmen (S501) durch ein Gerät, ob sich eine aktuelle Schnittstelle in einem Zustand der Passworteingabe befindet;
wenn bestimmt wird, dass sich die aktuelle Schnittstelle in einem Zustand der Passworteingabe befindet, Empfangen (S502) von Benutzereingabeinformationen durch das Gerät, wobei die Eingabeinformationen ein Zeichen und einen Druckwert umfassen, der bei der Eingabe des Zeichens erstellt wird; und
Verarbeiten (S503) des Zeichens gemäß dem Druckwert durch das Gerät, um ein Passwort zu erstellen, wobei die Eingabeinformationen (Xₙ, Yₙ) sind, Xₙ ein eingegebenes Zeichen ist, Yₙ ein Druckwert entsprechend Xₙ ist und n eine natürliche Zahl ist; und
das Verarbeiten, durch das Gerät, des Zeichens gemäß dem Druckwert, um ein Passwort zu erstellen, insbesondere ist:
Bestimmen durch das Gerät, ob Yₙ größer als ein voreingestellter Schwellenwert Yₘₐₓ₂ ist; und
wenn bestimmt wird, dass Yₙ > Yₘₐₓ₂, Erstellen durch das Gerät eines Passworts Xₙ, Xₙ, wobei Xₙ, Xₙ die wiederholte Eingabe des Zeichens Xₙ bezeichnet.

2. Verfahren nach Anspruch 1, wobei die aktuelle Schnittstelle eine Benutzerschnittstelle mit einem Eingabefokus ist.

3. Verfahren nach Anspruch 1 oder 2, wobei das Bestimmen durch ein Gerät, ob sich eine aktuelle Schnittstelle in einem Zustand der Passworteingabe befindet, insbesondere ist: Bestimmen durch das Gerät, ob sich die aktuelle Schnittstelle in einem Zustand der Passworteingabe gemäß einem Eingabefeldtyp der aktuellen Schnittstelle befindet.

4. Verfahren nach Anspruch 3, wobei das Verfahren ferner umfasst: wenn das Gerät erhält, dass der Eingabefeldtyp android:inputType="textPassword" ist, Bestimmen durch das Gerät, dass sich die aktuelle Schnittstelle in einem Zustand der Passworteingabe befindet.

5. Verfahren nach Anspruch 1, wobei das Verfahren ferner umfasst: wenn bestimmt wird, dass sich die aktuelle Schnittstelle nicht in einem Zustand der Passworteingabe befindet, Einstellen eines Eingabemodus eines Eingabeverfahrens durch das Gerät gemäß einem Eingabefeldtyp der aktuellen Schnittstelle.

6. Verfahren nach Anspruch 1, wobei das Verfahren ferner umfasst: Verifizieren des erstellten Passworts durch das Gerät.

7. Verfahren nach Anspruch 1, wobei das Verarbeiten des Zeichens gemäß dem Druckwert durch das Gerät insbesondere umfasst: wenn mehrere Passwort-Erstellungsalgorithmen vorhanden sind, Erstellen eines Passworts gemäß einem von einem Benutzer ausgewählten Passwort-Erstellungsalgorithmus.

8. Vorrichtung zum Erstellen eines Passworts mit Hilfe von Druckberührung, wobei die Vorrichtung eine Zustandsbestimmungseinheit (141), eine Eingabeempfangseinheit (142) und eine Passworterstellungseinheit (143) umfasst, wobei
die Zustandsbestimmungseinheit (141) dazu konfiguriert ist, zu bestimmen, ob sich eine aktuelle Schnittstelle in einem Zustand der Passworteingabe befindet;
die Eingabeempfangseinheit (142) dazu konfiguriert ist: wenn die Zustandsbestimmungseinheit (141) bestimmt, dass sich die aktuelle Schnittstelle in einem Zustand der Passworteingabe befindet, Empfangen von Benutzereingabeinformationen, wobei die Eingabeinformationen ein Zeichen und einen Druckwert umfassen, der bei der Eingabe des Zeichens erstellt wird; und
die Passworterstellungseinheit (143) dazu konfiguriert ist, das Zeichen gemäß dem Druckwert zu verarbeiten, um ein Passwort zu erstellen, wobei die Eingabeinformationen (Xₙ, Yₙ) sind, Xₙ ein eingegebenes Zeichen ist, Yₙ ein Druckwert entsprechend Xₙ ist und n eine natürliche Zahl ist; und
die Passworterstellungseinheit (143) insbesondere dazu konfiguriert ist:
zu bestimmen, ob Yₙ größer als ein voreingestellter Schwellenwert Yₘₐₓ₂ ist; und wenn bestimmt wird, dass Yₙ >Yₘₐₓ₂,
ein Passwort Xₙ, Xₙ zu erstellen, wobei Xₙ, Xₙ die wiederholte Eingabe des Zeichens Xₙ bezeichnet.

## Revendications

1. Procédé de génération d'un mot de passe au moyen d'une pression tactile, le procédé consistant à :
déterminer (S501), par un dispositif, si une interface actuelle est dans un état de saisie de mot de passe ;
lorsqu'il est établi que l'interface actuelle est dans un état de saisie de mot de passe, recevoir (S502), par le dispositif, des informations d'entrée utilisateur, les informations d'entrée comprenant un caractère et une valeur de pression générée lorsque le caractère est saisi ; et
traiter (S503), par le dispositif, le caractère en fonction de la valeur de pression, afin de générer un mot de passe, dans lequel les informations d'entrée sont (Xₙ, Yₙ), Xₙ est un caractère saisi, Yₙ est une valeur de pression correspondant à Xₙ, et n est un nombre naturel ; et
le traitement, par le dispositif, du caractère en fonction de la valeur de pression, afin de générer un mot de passe, consiste plus particulièrement à :
déterminer, par le dispositif, si Yₙ est supérieur à un seuil prédéfini Yₘₐₓ₂; et
lorsqu'il est établi que Yₙ> Yₘₐₓ₂, générer, par le dispositif, un mot de passe Xₙ, Xₙ, dans lequel Xₙ, Xₙ désigne le fait de saisir à plusieurs reprises le caractère Xₙ.

2. Procédé selon la revendication 1, dans lequel l'interface actuelle est une interface utilisateur ayant un focus d'entrée.

3. Procédé selon la revendication 1 ou 2, dans lequel la détermination, par un dispositif, établissant si une interface actuelle est dans un état de saisie de mot de passe consiste plus particulièrement à : déterminer, par le dispositif, si l'interface actuelle est ou non dans un état de saisie de mot de passe en fonction d'un type de zone de saisie de l'interface actuelle.

4. Procédé selon la revendication 3, dans lequel le procédé consiste en outre à : lorsque le dispositif obtient que le type de zone de saisie est android:inputType="textPassword", déterminer, par le dispositif, que l'interface actuelle est dans un état de saisie de mot de passe.

5. Procédé selon la revendication 1, dans lequel le procédé consiste en outre à : lorsqu'il est établi que l'interface actuelle n'est pas dans un état de saisie de mot de passe, ajuster, par le dispositif, un mode de saisie d'un procédé de saisie en fonction d'un type de zone de saisie de l'interface actuelle.

6. Procédé selon la revendication 1, dans lequel le procédé consiste en outre à : vérifier, par le dispositif, le mot de passe généré.

7. Procédé selon la revendication 1, dans lequel le traitement, par le dispositif, du caractère en fonction de la valeur de pression consiste plus particulièrement à : en cas de multiples algorithmes de génération de mot de passe, générer un mot de passe en fonction d'un algorithme de génération de mot de passe sélectionné par un utilisateur.

8. Appareil de génération d'un mot de passe au moyen d'une pression tactile, l'appareil comprenant une unité de détermination d'état (141), une unité de réception de saisie (142) et une unité de génération de mot de passe (143), dans lequel
l'unité de détermination d'état (141) est configurée pour déterminer si une interface actuelle est ou non dans un état de saisie de mot de passe ;
l'unité de réception de saisie (142) est configurée pour : lorsque l'unité de détermination d'état (141) détermine que l'interface actuelle est dans un état de saisie de mot de passe, recevoir des informations d'entrée utilisateur, les informations d'entrée comprenant un caractère et une valeur de pression générée lorsque le caractère est saisi ; et
l'unité de génération de mot de passe (143) est configurée pour traiter le caractère en fonction de la valeur de pression, afin de générer un mot de passe, dans lequel les informations de saisie sont (Xₙ, Yₙ), Xₙ est un caractère saisi, Yₙ est une valeur de pression correspondant à Xₙ, et n est un nombre naturel ; et
l'unité de génération de mot de passe (143) est plus particulièrement configurée pour :
déterminer si Yₙ est supérieur à un seuil prédéfini Yₘₐₓ₂ ; et lorsqu'il est établi que Yₙ > Yₘₐₓ₂,
générer un mot de passe Xₙ, Xₙ, dans lequel Xₙ, Xₙ désigne le fait de saisir à plusieurs reprises le caractère Xₙ.
